# DEMANDE DE BREVET EUROPEEN

(11) **EP 2 489 957 A2**
(43) Date de publication de la demande: **22.08.2012**
(21) Numéro de dépôt: 12155917.3
(22) Date de dépôt: 17.02.2012
(51) Int. Cl.: F24J 2/04, F24J 2/52

(54) **Structure de montage, kit pour la réalisation d'une telle structure, système de récupération d'energie solaire comprenant une telle structure, installation comprenant un tel système et procède de montage d'un tel système**

(30) Priorité: 18.02.2011 FR 1151336
(71) Demandeur: Tenesol, 69890 La Tour de Salvagny (FR)
(72) Inventeur: Carre, Guillaume, 69005 LYON (FR)
(74) Mandataire: Cabinet Plasseraud

(57) **Abrégé**

Structure de montage pour monter un panneau de récupération d'énergie solaire (10) sur un bâti, comprenant:
- un rail comportant:
un socle,
une partie de maintien sur laquelle un bord longitudinal du panneau de récupération (10) est destiné à reposer,

- une traverse (90) comportant:
une base (91),
une partie de maintien (100) sur laquelle un bord transversal du panneau de récupération (10) est destiné à reposer,
dans laquelle la traverse (90) comporte en outre une aile (120) en regard de la partie de maintien (100), ladite aile (120) étant inclinée en s'écartant de la partie de maintien (100).

## Description

L'invention se rapporte à une structure de montage, à un kit pour la réalisation d'une telle structure, à un système de récupération d'énergie solaire comprenant une telle structure, à une installation comprenant un tel système et à un procédé de montage d'un tel système.

En particulier, l'invention se rapporte à une structure de montage pour monter au moins un panneau de récupération d'énergie solaire sur un bâti, ledit panneau de récupération présentant au moins deux bords perpendiculaires entre eux et un espace délimité par les bords, ledit espace étant destiné à être placé en regard du bâti, ladite structure de montage comprenant :
- au moins un rail s'étendant selon une direction longitudinale d'un plan horizontal, ledit rail comportant :
   un socle présentant une surface inférieure horizontale destinée à reposer sur le bâti, ledit socle étant destiné à être fixé au bâti,
   une partie de maintien portée par le socle et s'étendant selon une direction verticale perpendiculaire au plan horizontal, à l'opposé de la surface inférieure du socle, ladite partie de maintien présentant au moins une surface d'appui horizontale sur laquelle l'un, longitudinal, des bords du panneau de récupération est destiné à reposer,
- au moins une traverse s'étendant selon une direction transversale du plan horizontal, perpendiculaire aux directions longitudinale et verticale, ladite traverse comportant :
   une base présentant une surface inférieure horizontale reposant sur le rail et un bord, ladite base étant fixée au rail,
   une partie de maintien portée par la base et s'étendant selon la direction verticale, à l'opposé de la surface inférieure de la base, ladite partie de maintien étant agencée à distance, selon la direction longitudinale, du bord de la base et présentant au moins une surface d'appui horizontale sur laquelle l'autre bord, transversal, du panneau de récupération est destiné à reposer.

On connaît, notamment du document DE 20 2007 010520, des structures de montage de ce type dont le montage est complexe.

L'invention vise à pallier les problèmes évoqués ci-dessus.

A cet effet, l'invention propose une structure de montage du type précité dans laquelle la traverse comporte en outre une aile portée par la base en regard de la partie de maintien, ladite aile s'étendant entre une première extrémité reliée au bord de la base et une deuxième extrémité, ladite aile étant inclinée par rapport à la direction verticale en s'écartant de la partie de maintien et la deuxième extrémité étant placée à une distance, selon la direction verticale, de la base supérieure à celle de la surface d'appui de la partie de maintien de la traverse, de sorte à permettre un montage de la traverse sur le rail après que le panneau de récupération a été monté sur le rail en inclinant la traverse autour d'un axe parallèle à la direction transversale.

Ainsi, l'aile de la traverse est conformée pour pouvoir être glissée sous le bord transversal du panneau de récupération. La mise en place de la traverse s'en trouve simplifiée ce qui simplifie le montage de la structure de montage.

Dans des modes de réalisation, l'invention peut comprendre une ou plusieurs des dispositions suivantes :
- l'aile présente une courbure dirigée vers la partie de maintien depuis la base jusqu'à l'extrémité libre,
- la courbure a un rayon de courbure constant,
- la base de la traverse comprend un unique bras de fixation au rail disposé à l'opposé de l'aile par rapport à la partie de maintien,
- la base de la traverse présente un bord opposé au bord auquel l'aile est reliée et agencé à distance, selon la direction longitudinale, de la partie de maintien, le bras s'étendant horizontalement depuis le bord opposé,
- la traverse comprend une conduite de drainage délimitée par la partie de maintien et une paroi latérale qui s'étend en regard de ladite partie de maintien, depuis le bord opposé de la base, le bras étant disposé à l'extérieur de la conduite de drainage.

Selon un deuxième aspect, l'invention propose un kit pour la réalisation d'une structure de montage telle que définie précédemment, comprenant :
- au moins un rail s'étendant selon une direction d'extension et comportant:
   un socle présentant une surface inférieure plane,
   une partie de maintien portée par le socle et s'étendant selon une direction perpendiculaire à la surface inférieure du socle, à l'opposé de ladite surface inférieure, ladite partie de maintien présentant au moins une surface d'appui parallèle à la surface inférieure du socle,
- au moins une traverse s'étendant selon une direction d'extension et comportant:
   une base présentant une surface inférieure plane et un bord,
   une partie de maintien portée par la base et s'étendant selon une direction perpendiculaire à la surface inférieure de la base, à l'opposé de ladite surface inférieure, ladite partie de maintien étant agencée à distance, selon une direction perpendiculaire à la direction d'extension de la traverse, du bord de la base et présentant au moins une surface d'appui parallèle à la surface inférieure de la base,
   dans lequel la traverse comporte en outre une aile portée par la base en regard de la partie de maintien, ladite aile s'étendant entre une première extrémité reliée au bord de la base et une deuxième extrémité, ladite aile étant inclinée par rapport à la direction perpendiculaire à la surface inférieure de la base en s'écartant de la partie de maintien et la deuxième extrémité étant placée à une distance, selon la direction perpendiculaire à la surface inférieure de la base, de la base supérieure à celle de la surface d'appui de la partie de maintien de la traverse.

Selon un troisième aspect, l'invention propose un système de récupération d'énergie solaire comprenant :
- une structure de montage telle que définie précédemment, la surface inférieure de la base de la traverse reposant sur le rail, la traverse étant fixée au rail,
- au moins un panneau de récupération d'énergie solaire, ledit panneau de récupération présentant au moins deux bords perpendiculaires entre eux, l'un, longitudinal, des bords reposant sur la surface d'appui du rail, l'autre bord, transversal, reposant sur la surface d'appui de la traverse, l'aile de la traverse étant disposée dans l'espace du panneau de récupération.

Selon un quatrième aspect, l'invention propose une installation comprenant un système de récupération d'énergie solaire tel que défini précédemment, et un bâti sur lequel la surface inférieure du socle du rail repose et auquel le socle du rail est fixé.

Selon un cinquième aspect, l'invention propose un procédé de montage d'un système de récupération d'énergie solaire selon la revendication sur un bâti, comprenant les étapes consistant à :
- prévoir un bâti présentant un plan horizontal et au moins un panneau de récupération d'énergie solaire présentant au moins deux bords perpendiculaires entre eux et un espace délimité par les bords,
- prévoir au moins un rail s'étendant selon une direction d'extension et comportant :
   un socle présentant une surface inférieure plane,
   une partie de maintien portée par le socle et s'étendant selon une direction perpendiculaire à la surface inférieure du socle, à l'opposé de ladite surface inférieure, ladite partie de maintien présentant au moins une surface d'appui parallèle à la surface inférieure du socle,
- prévoir au moins une traverse s'étendant selon une direction d'extension et comportant :
   une base présentant une surface inférieure plane et un bord,
   une partie de maintien portée par la base et s'étendant selon une direction perpendiculaire à la surface inférieure de la base, à l'opposé de ladite surface inférieure, ladite partie de maintien étant agencée à distance, selon une direction perpendiculaire à la direction d'extension de la traverse, du bord de la base et présentant au moins une surface d'appui parallèle à la surface inférieure de la base,
   une aile portée par la base en regard de la partie de maintien, ladite aile s'étendant entre une première extrémité reliée au bord de la base et une deuxième extrémité, ladite aile étant inclinée par rapport à la direction perpendiculaire à la surface inférieure de la base en s'écartant de la partie de maintien et la deuxième extrémité étant placée à une distance, selon la direction perpendiculaire à la surface inférieure de la base, de la base supérieure à celle de la surface d'appui de la partie de maintien de la traverse,
- poser la surface inférieure du socle du rail sur le bâti de telle manière que la direction d'extension du rail soit parallèle à une direction longitudinale du plan horizontal, et fixer le socle au bâti,
- poser l'un, longitudinal, des bords du panneau de récupération sur la surface d'appui du rail, l'espace du panneau de récupération étant placé en regard du bâti,
- positionner la traverse par rapport au rail de telle manière que la direction d'extension de la traverse soit parallèle à une direction transversale du plan horizontal, perpendiculaire à la direction longitudinale,
- incliner la traverse dans un sens autour d'un axe parallèle à la direction transversale de sorte à faire passer l'aile sous l'autre bord, transversal, du panneau de récupération et incliner la traverse dans l'autre sens autour de l'axe de sorte à disposer l'aile dans l'espace du panneau de récupération,
- poser la surface inférieure de la base de la traverse sur le rail et fixer la base de la traverse au rail.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation en perspective d'une installation comprenant un bâti sous la forme d'une charpente d'un toit, et un système de récupération d'énergie solaire comprenant des panneaux de récupération d'énergie solaire et une structure de montage des panneaux de récupération sur la charpente,
- la figure 2 est une représentation en coupe partielle selon l'orientation référencée 11-11 sur la figure 1, illustrant une section transversale d'un rail et d'un profilé de contre-appui de la structure de montage,
- la figure 3 est une représentation en coupe partielle selon l'orientation référencée III-III sur la figure 1, illustrant une section transversale d'une traverse et d'un profilé de contre-appui de la structure de montage,
- la figure 4 est une représentation en perspective partielle d'une étape d'un procédé de montage du système de récupération sur la charpente, illustrant le montage de dispositifs de remplissage entre des rails fixés à la charpente,
- la figure 5 est une représentation en perspective d'une étape du procédé de montage, illustrant le montage bout à bout de deux rails par l'intermédiaire d'une éclisse placée dans des logements respectifs des rails,
- la figure 6 est une représentation en coupe selon l'orientation référencée VI-VI sur la figure 5, illustrant une section transversale du rail et de l'éclisse,
- la figure 7 est une représentation en coupe partielle selon l'orientation référencée VII-VII sur la figure 4, illustrant un bord du dispositif de remplissage fixé au rail entre un organe de bridage du rail et une bride,
- la figure 8 est une représentation en coupe partielle selon l'orientation référencée III-III sur la figure 1 de deux étapes du procédé de montage, illustrant le montage de la traverse sur les rails après que le panneau de récupération a été monté sur les rails, la traverse étant mise dans une première position représentée en trait mixte pour permettre l'introduction d'une aile sous un bord du panneau de récupération, puis dans une deuxième position représentée en trait plein pour permettre la fixation de la traverse aux rails,
- la figure 9 est une représentation en perspective partielle selon l'orientation référencée IX-IX sur la figure 1, illustrant le positionnement relatif du rail et de la traverse dans la structure de montage.

Sur les figures, les mêmes références désignent des éléments identiques ou analogues.

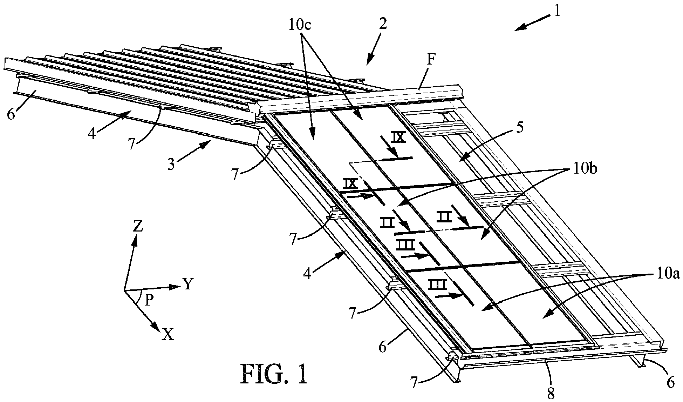

La figure 1 représente une installation 1 comprenant un bâti et un système de récupération d'énergie solaire 5 monté sur le bâti.

Dans le mode de réalisation représenté, le bâti est une charpente 3 du toit 2 d'un bâtiment. La charpente 3 présente un faîte F depuis lequel s'étendent deux pans 4 en pente, avec une inclinaison généralement comprise en 10° et 80°. Chacun des pans 4 de la charpente 3 comprend deux poutres 6 s'étendant parallèlement l'une à l'autre dans le sens de la pente, et quatre pannes 7 s'étendant parallèlement les unes aux autres, entre les poutres 6, transversalement à la pente. Dans d'autres modes de réalisation, le bâti pourrait également être un châssis présentant une pente ou non, et destiné à être posé sur une charpente 3, sur une façade d'un bâtiment, sur un sol ou tout autre surface.

Le système de récupération d'énergie solaire 5 est monté sur l'un des pans 4 de la charpente 3. Pour la suite de la description, le pan 4 sur lequel le système de récupération d'énergie solaire 5 est monté établit un plan P défini comme étant horizontal et comprenant une direction longitudinale X, dans le sens de la pente, et une direction transversale Y, perpendiculaire à la direction longitudinale X et donc transversale à la pente. On définit également une direction verticale Z perpendiculaire au plan horizontal P et aux directions longitudinale X et transversale Y.

Le système de récupération d'énergie solaire 5 comprend plusieurs panneaux de récupération d'énergie solaire, dont six sont représentes sur la figure 1.

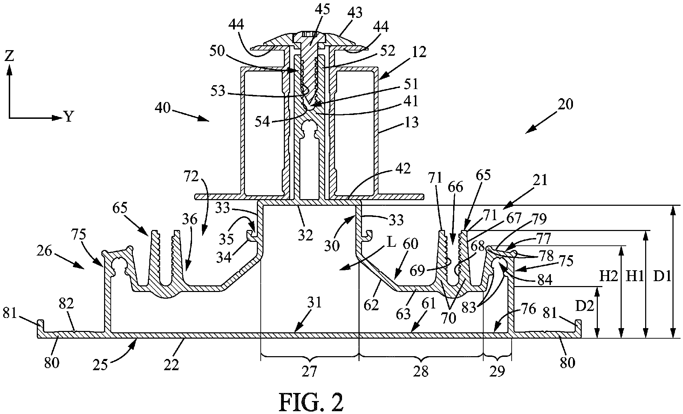

Les panneaux de récupération d'énergie solaire sont, par exemple, constitués par des panneaux photovoltaïques 10. Chaque panneau photovoltaïque 10 comprend un réseau de cellules photovoltaïques qui génèrent une énergie électrique à partir de la lumière du soleil, et un circuit électrique connecté à un réseau électrique pour transporter l'énergie électrique générée par les cellules photovoltaïques. Comme il ressort des figures 2, 3, 8 et 9, chaque panneau photovoltaïque 10 comprend une plaque 11 rectangulaire portant les cellules photovoltaïques et un cadre 12 rectangulaire maintenant la plaque 11. Le cadre 12 comprend alors deux grands montants 13 parallèles entre eux, formant deux bords opposés du panneau photovoltaïque 10, et deux petits montants 14 parallèles entre eux et perpendiculaires aux grands montants 13, formant deux autres bords opposés du panneau photovoltaïque 10. Les grands montants 13 et les petits montants 14 sont adaptés pour permettre un emmanchement de la plaque 11 de manière à en exposer une surface de captation, tout en délimitant, à l'opposé de la surface de captation de la plaque 11, un espace 15 dans lequel le circuit électrique peut être disposé.

Les panneaux photovoltaïques 10 sont disposés sur le pan 4 de la charpente 3 de manière adjacente selon les directions longitudinale X et transversale Y avec les grands montants 13 du cadre 12 qui forment des bords longitudinaux selon la direction longitudinale X, et les petits montants 14 du cadre 12 qui forment des bords transversaux selon la direction transversale Y.

Pour ce faire, les panneaux photovoltaïques 10 sont montés sur la charpente 3 du toit 2 par l'intermédiaire d'une structure de montage comprenant des rails 20 s'étendant selon la direction longitudinale X et des traverses 90 s'étendant selon la direction transversale Y pour définir un quadrillage présentant des mailles dans lesquelles les panneaux photovoltaïques 10 sont disposés.

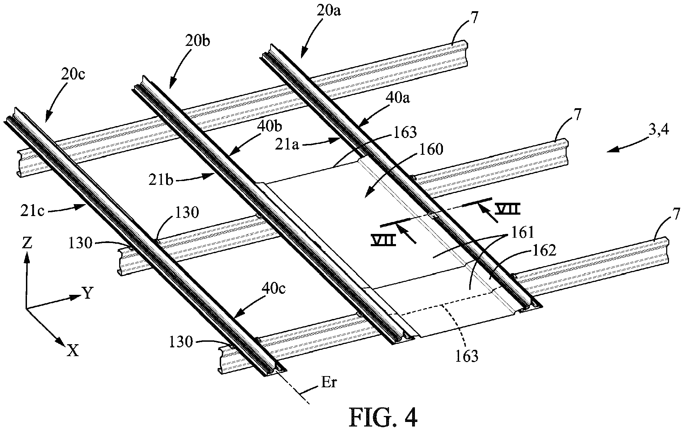

Le rail 20 représenté en section transversal sur la figure 2 et en perspective sur la figure 4 est un profilé, par exemple métallique et notamment formé par extrusion d'aluminium, qui s'étend selon une direction d'extension Er dans laquelle il présente une longueur.

Dans le mode de réalisation représenté, la direction d'extension Er du rail 20 correspond à la direction longitudinale X. Le rail 20 est décrit ci-après avec son agencement particulier dans l'installation de la figure 1, c'est-à-dire en relation avec les directions longitudinale X, transversale Y et verticale Z prédéfinies. La description est, toutefois, transposable au rail 20 selon toute autre orientation en considérant que :
- la direction longitudinale X correspond à la direction d'extension Er du rail 20,
- la direction transversale Y correspond à une première direction perpendiculaire à la direction d'extension Er du rail 20 et comprise dans un même plan de référence du rail 20 que la direction d'extension Er,
- la direction verticale Z correspond à une deuxième direction perpendiculaire au plan de référence du rail 20 et donc à la direction d'extension Er ainsi qu'à la première direction.

Le rail 20 comporte un socle 21 présentant une surface inférieure 22 plane, en particulier horizontale dans le mode de réalisation représenté, et définissant le plan de référence du rail 20. Le socle 21 s'étend sur toute la longueur du rail 20 entre des première 23 et deuxième 24 extrémités opposées, écartées l'une de l'autre selon la direction longitudinale X.

Le socle 21 du rail 20 est creux et comprend des première 25 et deuxième 26 parois délimitant entre elles un logement L qui s'étend sur toute la longueur du rail 20 et qui est ouvert selon la direction longitudinale X aux première 23 et deuxième 24 extrémités du rail 20.

La première paroi 25 est horizontale et porte la surface inférieure 22 du socle 21.

La deuxième paroi 26 est solidarisée à la première paroi 25 à l'opposé de la surface inférieure 22 du socle 21. La deuxième paroi 26 est conformée pour que le socle 21 comprenne :
- une première partie 27, centrale, s'étendant selon la direction verticale Z,
- deux deuxièmes parties 28 s'étendant de part et d'autre de la première partie 27 selon la direction transversale Y, et
- deux troisièmes parties 29 s'étendant selon la direction verticale Z, chacune des troisièmes parties 29 étant adjacente, selon la direction transversale Y, à l'une des deuxièmes parties 28, à l'opposé de la première partie 27.

Dans le mode de réalisation représenté, le rail 20 présente une symétrie par rapport à un plan vertical XZ médian. Seules l'une des deuxièmes parties 28 et l'une des troisièmes parties 29 seront décrites, les descriptions étant directement transposable aux autres deuxième 28 et troisième 29 parties. II est à noter, à cet égard, que dans d'autres modes de réalisation, le socle 21 pourrait ne comprendre qu'une seule deuxième partie 28 et/ou une seule troisième partie 29.

En particulier, la deuxième paroi 26 comporte une nervure centrale 30 agencée en regard et à une première distance D1, mesurée selon la direction verticale Z par rapport à la surface inférieure 22 du socle 21, d'une première portion 31 de la première paroi 25 avec laquelle elle forme la première partie 27 du socle 21. La nervure centrale 30 est formée d'une plateforme 32 située dans un plan horizontal XY et placée à la distance D1, et de deux parois verticales 33 situées dans des plans verticaux XZ et s'étendant depuis la plateforme 32 vers la première paroi 25. Chacune des parois verticales 33 de la nervure centrale 30 porte, sur une surface extérieure opposée au logement L, une saillie 34 pourvue d'une rainure 35 ouverte selon la direction verticale Z.

La première partie 27 du socle 21 porte une partie de maintien 40 s'étendant sur toute la longueur du rail 20 et adaptée pour assurer un maintien du panneau de récupération 10.

La partie de maintien 40 comprend une barre de fixation 41 qui s'étend selon la direction verticale Z depuis la plateforme 32 de la nervure centrale 30, et contre laquelle l'un des grands montants 13 du panneau de récupération 10 peut venir en contact. De part et d'autre de la barre de fixation 41, des surfaces extérieures de la plateforme 32 forment deux surfaces d'appui 42 horizontales sur chacune desquelles l'un des grands montants 13 de deux panneaux de récupération 10 adjacents peut reposer.

La barre de fixation 41 est adaptée pour permettre la fixation d'un profilé de contre-appui assurant un maintien du panneau de récupération 10 sur le rail 20 et/ou une étanchéité entre le panneau de récupération 10 et le rail 20.

Sur la figure 2, le profilé de contre-appui est un profilé de bridage 43 présentant des surfaces de contre-appui 44 horizontales adaptées pour venir en appui sur les grands montants 13 du panneau de récupération 10 à l'opposé des surfaces d'appui 42.

Le profilé de bridage 43 est fixé à la barre de fixation 41 au moyen d'un ou plusieurs éléments de fixation présentant un filetage, tels que des vis 45. Pour ce faire, la barre de fixation comprend une paire centrale de parois de fixation 50 pourvue d'une gorge de vissage 51 ouverte selon la direction verticale Z, à l'opposé de la surface inférieure 22 du socle 21. La gorge de vissage 51 est adaptée pour recevoir les vis 45 et coopérer avec leur filetage. En particulier, la paire centrale de paroi de fixation 50 comprend deux parois 52 s'étendant sur toute la longueur du rail 20, sensiblement selon la direction verticale Z, et présentant respectivement deux surfaces intérieures 53 en regard délimitant la gorge de vissage 51. Les surfaces intérieures 53 sont pourvues respectivement de séries de rainure 54 agencées pour coopérer avec le filetage des vis 45. Chacune des séries de rainure 54 comprend une ou plusieurs rainures 54 s'étendant selon la direction longitudinale X. Des mêmes vis 45 peuvent ainsi être utilisées pour l'assemblage des profilés de bridage 43 aux rails 20 de toute la structure de montage. En outre, l'assemblage précité ne nécessite pas un positionnement relatif précis des profilés de bridage 43 par rapport aux rails 20. Le montage de la structure de montage s'en trouve simplifié

La deuxième paroi 26 du socle 21 comporte également un flasque latéral 60 adjacent, selon la direction transversale Y, à la nervure centrale 30. Le flasque latéral 60 est agencé en regard et à une deuxième distance D2, mesurée selon la direction verticale Z par rapport à la surface inférieure 22 du socle 21, d'une deuxième portion 61 de la première paroi 25 avec laquelle il forme la deuxième partie 28 du socle 21. La deuxième distance D2 est inférieure à la première distance D1 de la plateforme 32 de la nervure centrale 30. Le flasque latéral 60 comporte une portion de liaison 62 adjacente à l'une des parois verticales 33 de la nervure centrale 30 et une portion de fixation 63 qui s'étend depuis la portion de liaison 62, à distance, selon la direction transversale Y, de la partie de maintien 40 du rail 20. La portion de liaison 62 est inclinée depuis la paroi verticale 33 de la nervure centrale 30 vers la première paroi 25 du socle 21 et la portion de fixation 63 est horizontale et placée à la distance D2 de la surface inférieure 22 du socle 21.

La portion de fixation 63 porte une paire latérale de parois de fixation 65 pour fixer la traverse 90 au rail 20. Comme pour la paire centrale de parois de fixation 50, la paire latérale de parois de fixation 65 est pourvue d'une gorge de vissage 66 ouverte selon la direction verticale Z, à l'opposé de la surface inférieure 22 du socle 21. La gorge de vissage 66 est adaptée pour recevoir des vis, de préférence les mêmes vis 45 que celles utilisées pour la fixation du profilé de bridage 43 au rail 20, et coopérer avec leur filetage. En particulier, la paire latérale de parois de fixation 65 comprend deux parois 67 s'étendant sur toute la longueur du rail 20, sensiblement selon la direction verticale Z, et présentant respectivement deux surfaces intérieures 68 en regard délimitant la gorge de vissage 66. Les surfaces intérieures 68 sont pourvues respectivement d'au moins deux rainures 69 agencées pour coopérer avec le filetage des vis 45. Les parois 67 de la paire latérale de parois de fixation 65 présentent des premières extrémités 70 respectives solidaires de la portion de fixation 63 et ainsi agencées à proximité, selon la direction verticale Z, de la surface inférieure 22 du socle 21, et des deuxièmes extrémités respectives 71, libres, placées à une première hauteur H1, selon la direction verticale Z, de la surface inférieure 22 du socle 21. La première hauteur H1 est comprise entre les première D1 et deuxième D2 distances précitées.

La partie de maintien 40 du rail 20, et en particulier la nervure centrale 30, et la paire latérale de parois de fixation 65, et en particulier la paroi 67 en regard de la nervure centrale 30, délimitent sur la deuxième partie 28 du socle une conduite de drainage 72.

La deuxième paroi 26 du socle 21 comporte en outre une nervure latérale 75 adjacente, selon la direction transversale Y, au flasque latéral 60, à l'opposé de la nervure centrale 30. La nervure latérale 75 est agencée en regard et à une deuxième hauteur H2, selon la direction verticale Z, d'une troisième portion 76 de la première paroi 25 avec laquelle elle forme la troisième partie 29 du socle 21. La deuxième hauteur H2 est comprise entre les première D1 et deuxième D2 distances précitées, en étant inférieure à la première hauteur H1 de la paire latérale de parois de fixation 65.

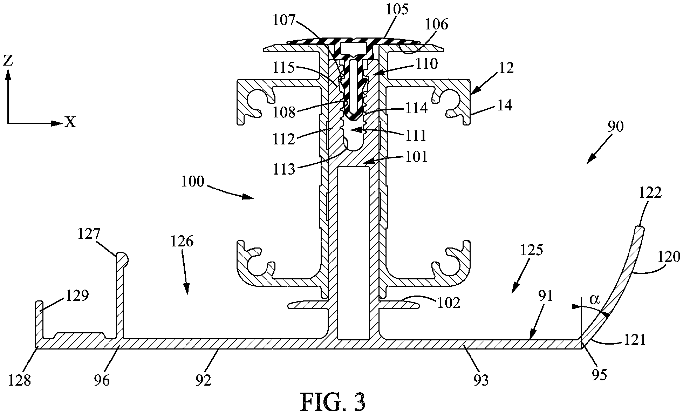

La nervure latérale 75 s'étend selon la direction verticale Z jusqu'à une extrémité libre 77 ayant une concavité dirigée à l'opposé de la surface inférieure 22 du socle 21. En particulier, l'extrémité libre 77 de la nervure latérale 75 présente deux bordures longitudinales 78, par exemple arrondies, écartées l'une de l'autre selon la direction transversale Y et une surface centrale 79 interposée entre les bordures longitudinales 78. Les bordures longitudinales 78 sont en saillie selon la direction verticale Z par rapport à la surface centrale 79. Sur la figure 3, l'extrémité libre 77 de la nervure latérale 75 est inclinée par rapport à un plan horizontal XY de sorte que la bordure longitudinale 78 située du côté de la partie de maintien 40 est agencé à une distance, selon la direction verticale Z, de la surface inférieure 22 du socle 21 supérieure à celle de l'autre bordure longitudinale 78.

Le logement L présente une section transversale sensiblement en forme de W avec deux espaces verticaux latéraux, formés respectivement dans les troisièmes parties 29 du socle 21, de part et d'autre d'un espace vertical central, formé dans la première partie 27 du socle 21, et deux espaces transversaux, formés respectivement dans les deuxièmes parties 28 du socle 21, reliant les espaces verticaux latéraux à l'espace vertical central. Chacun des espaces verticaux latéraux comporte une portion arrondie 84 autour d'un axe s'étendant selon la direction longitudinale X, au voisinage de l'extrémité libre 77 de la nervure latérale 75. Deux bourrelets 83 en regard sont alors formés sur une surface intérieure dirigée vers le logement L de la nervure latérale 75, à distance de l'extrémité libre 77, pour délimiter la portion arrondie 84.

Pour fixer le socle 21 aux pannes 7 de la charpente 3, la première paroi 25 du socle 21 se prolonge transversalement par rapport aux troisièmes parties 29 par des bras 80 présentant chacun une extrémité pourvue d'un rebord 81 selon la direction verticale Z. Un élément de repérage, utilisé pour la mise en place du rail 20 sur la charpente 3, se présente sous la forme d'une rainure en V 82 ménagée de manière centrale dans chacun des bras 80.

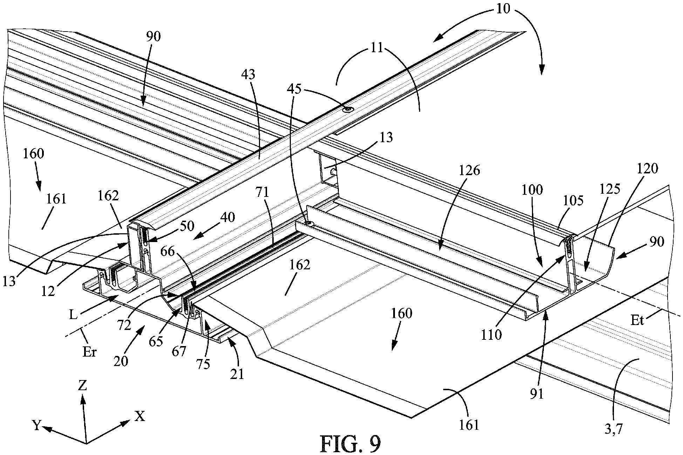

La traverse 90 représentée en section transversale sur la figure 3 et en perspective sur la figure 9 est un profilé, par exemple métallique et notamment formé par extrusion d'aluminium, qui s'étend selon une direction d'extension Et dans laquelle elle présente une longueur.

Dans le mode de réalisation représenté, la direction d'extension Et de la traverse 90 correspond à la direction transversale Y et, comme pour le rail 20, la traverse 90 est décrite ci-après en relation avec les directions longitudinale X, transversale Y et verticale Z prédéfinies. La description pourra également être transposée à la traverse 90 selon toute autre orientation en considérant que :
- la direction transversale Y correspond à la direction d'extension Et de la traverse 90,
- la direction longitudinale X correspond à une première direction perpendiculaire à la direction d'extension Et de la traverse 90 et comprise dans un même plan de référence de la traverse 90 que la direction d'extension Et,
- la direction verticale Z correspond à une deuxième direction perpendiculaire au plan de référence de la traverse 90 et donc à la direction d'extension Et ainsi qu'à la première direction.

La traverse 90 comporte une base 91 présentant une surface inférieure 92 plane, en particulier horizontale dans le mode de réalisation représenté, et définissant le plan de référence de la traverse 90. La base 91 s'étend sur toute la longueur de la traverse 90 et comprend une paroi 93 horizontale portant la surface inférieure 92 de la traverse 90. La paroi 93 présente des premier 95 et deuxième 96 bords écartés l'un de l'autre selon la direction longitudinale X et s'étendant sur toute la longueur de la traverse 90.

La base 91 de la traverse 90 porte, sur une surface supérieure opposée à la surface inférieure 92, une partie de maintien 100 s'étendant sur toute la longueur de la traverse 90 et adaptée pour assurer un maintien du panneau de récupération 10.

La partie de maintien 100 est agencée à distance, selon la direction longitudinale X, des premier 95 et deuxième 96 bords de la paroi 93, par exemple sensiblement à équidistance de ces bords. De manière analogue à la partie de maintien 40 du rail 20, la partie de maintien 100 de la traverse 90 comprend une barre de fixation 101 qui s'étend selon la direction verticale Z depuis la paroi 93, et contre laquelle l'un des petits montants 14 du panneau de récupération 10 peut venir en contact. Deux surfaces d'appui 102 horizontales sur chacune desquelles l'un des petits montants 14 de deux panneaux de récupération 10 adjacents peut reposer s'étendent depuis la barre de fixation 101, de part et d'autre de celle-ci.

La barre de fixation 101 est également adaptée pour permettre la fixation d'un profilé de contre-appui assurant un maintien du panneau de récupération 10 sur la traverse 90 et/ou une étanchéité entre le panneau de récupération 10 et la traverse 90.

Sur la figure 3, le profilé de contre-appui est un profilé d'étanchéité 105 présentant des surfaces de contre-appui 106 horizontales adaptées pour venir en appui sur les petites montants 14 du panneau de récupération 10 à l'opposé des surfaces d'appui 102. En variante, le profilé d'étanchéité 105 pourrait être remplacé par un profilé de bridage analogue à celui monté sur le rail 20. De même, le profilé de bridage 43 monté sur le rail 20 pourrait être remplacé par un profilé d'étanchéité analogue à celui monté sur la traverse 90.

La barre de fixation 101 comprend une paire centrale de parois de fixation 110 pourvue d'une gorge de vissage 111 ouverte selon la direction verticale Z, à l'opposé de la surface inférieure 92 de la traverse 90. La gorge de vissage 111 est adaptée pour recevoir des vis, de préférence les mêmes vis 45 que celles utilisées pour la fixation du profilé de bridage 43 au rail 20 et de la traverse 90 au rail 20, et coopérer avec leur filetage. En particulier, la paire centrale de parois de fixation 110 comprend deux parois 112 s'étendant sur toute la longueur de la traverse 90, sensiblement selon la direction verticale Z, et présentant respectivement deux surfaces intérieures 113 en regard délimitant la gorge de vissage 111. Les surfaces intérieures 113 sont pourvues respectivement de rainures 114 agencées pour coopérer avec le filetage des vis 45.

Le profilé d'étanchéité 105, et le cas échéant le profilé de bridage, peut ainsi être fixé à la barre de fixation 101 de la traverse 90 au moyen d'une ou plusieurs vis 45 s'étendant dans la gorge de vissage 111.

Dans le mode de réalisation, on prévoit, toutefois, que le profilé d'étanchéité 105 soit encliqueté dans la gorge de vissage 111 de la paire centrale de parois de fixation 110. Ainsi, les rainures 114 des parois 112 sont surmontées d'encoches 115 respectives adaptées pour recevoir des ergots 107 formés sur une ou plusieurs tiges 108 du profilé d'étanchéité 105, lesquelles tiges 108 sont insérées dans la gorge de vissage 111.

La traverse 90 comporte en outre une aile 120 portée par la base 92 en regard de la partie de maintien 100. L'aile 120 s'étend entre une première extrémité 121 reliée au premier bord 95 de la paroi 93 de la base 91 et une deuxième extrémité 122 distante de la base 91 selon la direction verticale Z. La deuxième extrémité 122 est placée à une distance, selon la direction verticale Z, de la base 91 supérieure à celle des surfaces d'appui 102. L'aile 120 de la traverse 90 est inclinée par rapport à la direction verticale d'angle a, compris entre 10 et 45°, de préférence entre 20° et 35°, en s'écartant de la barre de fixation 101. La deuxième extrémité 122 est alors placée à une distance, selon la direction longitudinale X, de la partie de maintien 100 plus grande que celle de la première extrémité 121. L'aile 120 présente, par ailleurs, entre ses première 121 et deuxième 122 extrémités, une courbure, de rayon de courbure constant dans le mode de réalisation représenté, dirigée vers la barre de fixation 101 de la partie de maintien 100. Sur la figure 3, l'aile 120 a une épaisseur constante entre une surface intérieure présentant une concavité tournée vers la partie de maintien 100, et une surface extérieure présentant une convexité tournée à l'opposé de la partie de maintien 100.

La partie de maintien 100 de la traverse 90, et en particulier la barre de fixation 101, et l'aile 120 délimitent sur la base 91 une conduite de drainage 125. La traverse 90 comporte une autre conduite de drainage 126 délimitée par la partie de maintien 100 et une paroi latérale 127 s'étendant verticalement depuis le deuxième bord 96 de la paroi 93.

Pour fixer la traverse 90 au rail 20, la paroi 93 de la base 91 se prolonge selon la direction longitudinale X depuis le deuxième bord 96 par un bras 128 horizontal présentant une extrémité pourvue d'un rebord 129 selon la direction verticale Z. Le bras 128 constitue l'unique partie de fixation de la traverse 90 au rail 20 et est disposé à l'extérieur de la conduite de drainage 126.

En relation avec les figures 4 à 9, on décrit un procédé de montage du système de récupération d'énergie solaire sur la charpente 3 du toit 2.

Sur la figure 4, des premier 20a, deuxième 20b et troisième 20c rails sont montés sur les pannes 7 du pan 4 de telle manière que la direction d'extension Er, matérialisée sur les rails 20a, 20b, 20c par les rainures en V 82, de chacun des rails 20a, 20b, 20c soit alignée avec la direction longitudinale X, matérialisée par exemple par un cordeau s'étendant entre le faîte F du toit 2 et le point le plus bas du pan 4 sur lequel les rails 20a, 20b, 20c sont montés. Les rails 20a, 20b, 20c s'étendent alors dans le sens de la pente, les surfaces inférieures 22 de leurs socles 21 a, 21 b, 21 c reposant sur les pannes 7. Les rails 20a, 20b, 20c sont écartés les uns des autres selon la direction transversale Y d'une distance correspondant sensiblement à une largeur du panneau de récupération 10 de manière à ce que les grands montants 14 du cadre 12 du panneau de récupération 10 puissent reposer sur les surfaces d'appui 42 de deux rails 20 adjacents.

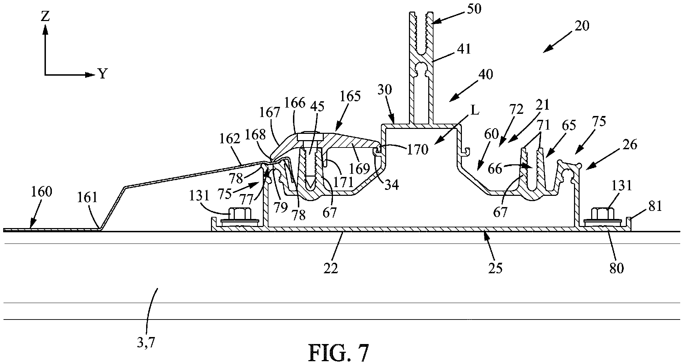

Les rails 20a, 20b, 20c sont ensuite fixés aux pannes 7. En particulier, deux organes de fixation, sous la forme de boulons 131 visibles sur la figure 7, traversent les bras 80 de chacun des socles 21 a, 21 b, 21 c pour s'étendre dans l'une des pannes 7. Les organes de fixation par exemple agencés au voisinage du faîte F du toit 2 forment alors un point bloquant. Le long de chacun des rails 20a, 20b, 20c, plusieurs brides 130 sont fixées aux autres pannes 7 pour assurer un maintien du rail 20. Les brides 130 comprennent par exemple chacune une gorge selon la direction longitudinale X recevant le rebord 81 du bras 80 de l'un des socles 21 a, 21 b, 21 c. Un tel maintien permet d'autoriser une dilatation des rails 20a, 20b, 20c selon la direction longitudinale X.

Selon les dimensions du système de récupération d'énergie solaire 5, plusieurs rails 20 peuvent être montés bout à bout selon la direction longitudinale X.

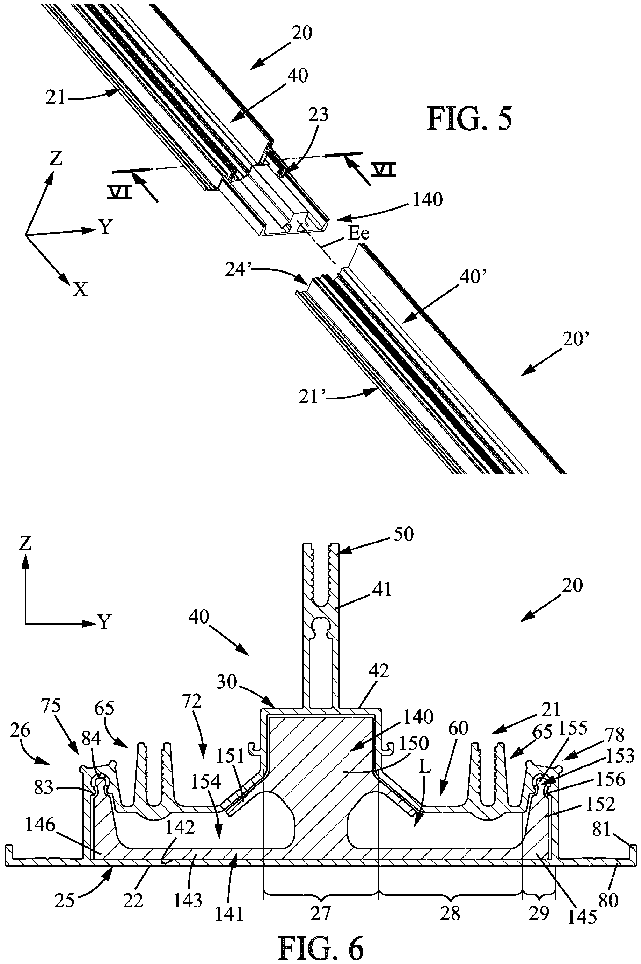

Les figures 5 et 6 illustrent le montage bout à bout de deux rails 20, 20' par l'intermédiaire d'une éclisse 140 adaptée pour être insérée dans une portion du logement L du socle 21 de l'un 20 des rails par la première extrémité 23 et dans une portion du logement L' du socle 21' de l'autre rail 20' par la deuxième extrémité 24'.

L'éclisse 140 est un profilé, par exemple métallique et notamment formé par extrusion d'aluminium, qui s'étend selon une direction d'extension Ee dans laquelle elle présente une longueur. Dans l'agencement représenté, la direction d'extension Ee de l'éclisse 140 correspond à la direction d'extension Er du rail et à la direction longitudinale X. Comme pour le rail 20, la description qui suit de l'éclisse 140 faite en relation avec les directions longitudinale X, transversale Y et verticale Z est aisément transposable à toute autre orientation de l'éclisse 140, en utilisant des correspondances de direction analogues à celles définies pour le rail 20.

L'éclisse 140 comporte un pied 141 présentant une surface inférieure 142 plane, en particulier horizontale dans le mode de réalisation représenté, et définissant un plan de référence de l'éclisse 140. Le pied 141 s'étend sur toute la longueur de l'éclisse 140 et comprend une paroi 143 horizontale portant la surface inférieure 142 de l'éclisse 140. La paroi 143 présente des premier 145 et deuxième 146 bords écartés l'un de l'autre selon la direction transversale Y et s'étendant sur toute la longueur de l'éclisse 140.

Le pied 141 de l'éclisse 140 porte, sur une surface supérieure opposée à la surface inférieure 142, une âme 150 s'étendant sur toute la longueur de l'éclisse 140.

L'âme 150 s'étend selon la direction verticale Z et est agencée à distance, selon la direction transversale Y, des premier 145 et deuxième 146 bords de la paroi 143, par exemple sensiblement à équidistance de ces bords. L'âme 150 de l'éclisse 140 comprend deux languettes 151 inclinées respectivement vers les premier 145 et deuxième 146 bords du pied 141. Les languettes 151 présentent une inclinaison correspondant à celles des portions de liaison 62 des flasques latéraux 60 du socle 21 du rail 20.

L'éclisse 140 comporte en outre deux ailes 152 s'étendant sur toute la longueur de l'éclisse 140, en regard et à distance, selon la direction transversale Y, de l'âme 150. En particulier, les ailes 152 s'étendent selon la direction verticale Z respectivement depuis les premier 145 et deuxième 146 bords du pied 141 jusqu'à des extrémités libres 153 respectives. Les extrémités libres 153 comportent chacune une tête arrondie 155 autour d'un axe s'étendant selon la direction longitudinale X. La tête arrondie 155 est reliée au reste de l'aile 152 par une portion rétrécie 156. L'âme 150 de l'éclisse 140 et chacune des ailes 152 délimitent sur le pied 141 une conduite de drainage 154.

L'éclisse 140 présente une section transversale sensiblement en W, correspondant la section transversale du logement L du socle 21 du rail 20. L'éclisse présente alors une inertie sensiblement identique à celle du rail 20.

L'éclisse 140 peut alors être placée dans le logement L du rail 20 avec la surface inférieure 142 du pied 141 qui repose sur la première paroi 25 du socle 21.

Le pied 141 est placé dans l'espace vertical central et les espaces transversaux du logement L. Les conduites de drainage 154 du pied 141 de l'éclisse 140 sont placées en correspondance selon la direction verticale Z avec les conduites de drainage 72 du rail 20, un espace libre étant ménagé entre le pied 141 de l'éclisse 140 et le flasque latéral 60 de chacune des deuxièmes parties 28 du socle 21. En particulier, le pied 141 est dimensionné pour que l'espace libre occupe l'essentiel de chacun des espaces transversaux du logement L.

L'âme 150 est placée dans l'espace vertical central du logement L et s'étend dans la nervure centrale 30. L'âme 150 est dimensionnée pour occuper l'essentiel de l'espace vertical central du logement L. Les languettes de l'âme 150 s'étendent parallèlement et au voisinage des portions de liaison 62 des flasques latéraux 60 des deuxièmes parties 28 du socle 21.

Les ailes 152 sont placées dans les espaces verticaux latéraux du logement L, les ailes 152 étant dimensionnées pour occuper l'essentiel de ces espaces. Les têtes arrondies 155 des ailes 152 sont placées dans les portions arrondies 84 des espaces verticaux latéraux, les portions rétrécies 156 des ailes 152 s'étendant entre les bourrelets 83 de la nervure latérale 75.

L'éclisse 140 ainsi disposée et fixée à l'un et/ou l'autre rails 20, 20' permet d'assurer une continuité mécanique dans la reprise des efforts entre les rails 20, 20', et une continuité de drainage en mettant en communication de fluide les conduites de drainage 72 du rail 20 situé en amont avec le logement L' du rail 20' situé en aval pour drainer l'eau s'infiltrant entre les rails 20, 20'.

Comme représenté sur les figures 4 et 7, pour des raisons de sécurité, la structure de montage comprend un dispositif de remplissage 160 interposé entre deux rails 20 adjacents, notamment entre le premier rail 20a et le deuxième rail 20b sur la figure 4. Le dispositif de remplissage 160 est adapté pour satisfaire aux exigences d'un essai de résistance aux chocs, et notamment à l'essai 1200 joules en retenant une masse de 50 kg lâchée d'une hauteur de 2,40 m pour simuler la chute d'un corps.

Dans le mode de réalisation, le dispositif de remplissage comprend une ou plusieurs plaques de tôle 161 déformables et de faible épaisseur selon la direction verticale Z par rapport à des dimensions mesurées selon les directions longitudinale X et transversale Z. Les plaques de tôle 161 sont, par exemple, rectangulaires et présentent deux bords longitudinaux 162 opposés et deux bords transversaux 163 opposés. Dans d'autres modes de réalisation, tout autre dispositif de remplissage, notamment du type comprenant une grille, une voûte, un barreaudage ou autre, peut être prévu. Au moins les bords longitudinaux 162 du dispositif de remplissage 160 sont alors de préférence déformables et de faible épaisseur.

Les deux nervures latérales 75 du socle 21 de chacun des rails 20a, 20b, 20c forment respectivement deux organes de bridage disposés de part et d'autre de la partie de maintien 40 pour fixer l'une des plaques de tôle 161 au rail 20.

En particulier, sur la figure 4, deux plaques de tôle 161 sont placées entre les premiers 20a et deuxième 20b rails, avec un chevauchement, les bords longitudinaux 162 des plaques de tôle 161 reposant sur les extrémités libres 77 des nervures latérales 75 en regard des socles 21 a, 21 b.

La structure de montage comprend alors une ou plusieurs brides 165 fixées chacune à l'un des rails 20, par exemple le premier rail 20a, et adaptées chacune pour venir en appui sur le bord longitudinal 162 de la plaque de tôle 161, à l'opposé de l'organe de bridage formé par la nervure latérale 75 du rail 20a.

Comme représenté sur la figure 7, la bride 165 comprend une partie de fixation 166 horizontale et une partie d'appui 167 s'étendant selon la direction transversale Y depuis la partie de fixation 166, en étant inclinée par rapport à celle-ci, jusqu'à une extrémité libre comportant une arête168. A l'opposé de la partie d'appui 167, la bride 165 comprend une extension 169 s'étendant depuis la partie de fixation 166 selon la direction transversale Y jusqu'à une extrémité libre pourvue d'une saillie d'accrochage 170. Une lèvre 171 s'étend selon la direction verticale Z sensiblement en regard de la partie d'appui 167.

La bride 165 est placée sur le socle 21 avec l'extension 169 solidarisée à la partie de maintien 40 du rail 20 par l'intermédiaire de la saillie d'accrochage 170 placée dans la rainure 35 de la saillie 34 portée par la nervure centrale 30. La partie de fixation 166 est positionnée sur les deuxièmes extrémités 71 des parois 67 de la paire latérale de parois de fixation 65 du rail 20, la lèvre 171 venant en contact avec la paroi 67 placée du côté de la partie de maintien 40.

Pour fixer la bride 165, une vis 45, identique à celles précédemment décrites, traverse la partie de fixation 166, par exemple en passant au travers d'un alésage, et s'étend dans la gorge de vissage 66 de la paire latérale de parois de fixation 65. La partie de fixation 166 de la bride 165 fixée à la paire latérale de parois de fixation 65 est placée à la première hauteur H1, la partie d'appui 167 étant inclinée vers la nervure latérale 75 formant l'organe de bridage et située à la deuxième hauteur H2, inférieure à la première hauteur H1.

Au fur et à mesure du vissage de la vis 45 dans la gorge de vissage 66, la bride 165 est serrée sur le socle 21 et l'arête 168 de la partie d'appui 167 s'enfonce dans la concavité formée dans l'extrémité libre 77 de la nervure latérale 75. Ce faisant, du fait de l'appui de l'arête 168 de la partie d'appui 167 entre les bordures longitudinales 78 de la nervure latérale 75 sur lesquelles repose le bord longitudinal 162 de la plaque de tôle 161, le bord longitudinal 162 se déforme jusqu'à présenter une concavité placée dans la concavité de l'extrémité libre 77 de la nervure latérale 75 en regard de l'arête 168 de la partie d'appui 167 de la bride 165.

Des plaques de tôle 161 sont ainsi montées dans les espaces existants entre les premier 20a, deuxième 20b et troisième 20c rails.

Le montage des dispositifs de remplissage 160 réalisé par bridage, et donc notamment sans perçage, permet d'améliorer la fixation des dispositifs de remplissage 160 et donc leur résistance aux chocs. II permet également de simplifier le montage du système de récupération d'énergie solaire 5.

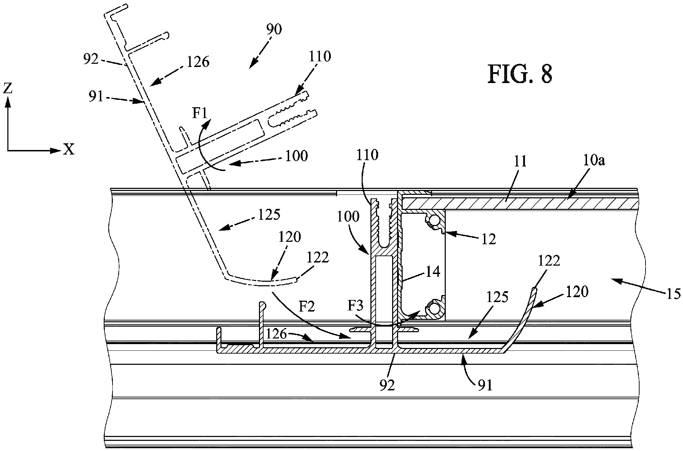

Sur la figure 8, une fois les plaques de tôle 161 mises en place, les panneaux de récupération 10a situés en aval par rapport au sens de la pente, c'est-à-dire à distance du faîte F du toit 2, sont placés entre les rails 20a, 20b, 20c en recouvrant les plaques de tôle 161. Les grands montants 14 du cadre 12 de chacun des panneaux de récupération 10a reposent sur les surfaces d'appui 42 de deux rails 20 adjacents, les surfaces de captation des plaques 11 étant dirigées à l'opposée de la charpente 3 et les espaces 15 des cadres 12 étant en regard de la charpente 3.

Après que les panneaux de récupération 10a aval ont été montés sur les rails 20, les traverses 90 sont à leur tour montées sur les rails 20.

En particulier, pour mettre en place la traverse 90, celle-ci est positionnée de telle manière que la direction d'extension Et de la traverse 90 soit parallèle à la direction transversale Y. La traverse 90 est ensuite inclinée dans un sens autour d'un axe parallèle à la direction transversale Y (flèche F1). La traverse 90 se trouve alors dans une première position, représentée en trait mixte sur la figure 8, dans laquelle l'aile 120 s'étend sensiblement au voisinage d'un plan horizontal XY. Dans cette première position, la deuxième extrémité 122 de l'aile 120 est introduite sous le bord transversal 14 du cadre 12 du panneau de récupération 10a, et on fait passer l'aile 120 sous le bord transversal 14 du panneau de récupération 10a (flèche F2). La traverse 90 est ensuite inclinée dans l'autre sens autour de l'axe parallèle à la direction transversale Y (flèche F3). La traverse 90 se trouve alors dans une deuxième position, représentée en trait plein sur la figure 8, dans laquelle la surface inférieure 92 de la base 91 est horizontale et l'aile 120 de la traverse 90 est disposée dans l'espace 15 du panneau de récupération 10a.

Dans cette position, la surface inférieure 92 de la base 91 de la traverse 90 repose sur le rail 20 et la base 91 de la traverse 90 est fixée au rail 20, le petit montant 14 du panneau de récupération 10 reposant sur la surface d'appui 102 de la traverse 90.

Les panneaux de récupération 10b, 10c et les traverses 90 sont ainsi montées à l'avancement sur les rails 20. Après que l'ensemble des panneaux de récupération 10 et des traverses 90 a été mis en place, les profilés d'étanchéité 105 sont fixés sur les traverses 90 et les profilés de bridage 43 sont fixés sur les rails 20.

La figure 9 est une vue en coupe selon deux plans transversaux perpendiculaire entre eux d'une partie de l'installation 1 à la fin du montage décrit ci-dessus, dans laquelle deux panneaux de récupération 10 n'ont pas été représentés pour faire apparaître le positionnement relatif de l'un des rails 20 et deux traverses 90 s'étendant de part et d'autre du rail 20.

Comme il apparaît sur la figure 9, la surface inférieure 92 de la base 91 de chacune des traverses 90 dans sa deuxième position repose sur les deuxièmes extrémités 71 des parois 67 de l'une des paires latérales de parois de fixation 65 du rail 20. Par ailleurs, le bras 128 disposé à l'opposé de l'aile 120 par rapport à la partie de maintien 100 se trouve sur une partie découverte de la traverse 90. La traverse 90 est alors fixée au rail 20 par la vis 45 traversant le bras 128 de la base 90 et s'étendant dans la gorge de vissage 66 de la paire latérale de parois de fixation 65.

Comme il apparaît également sur la figure 9, les conduites de drainage 125, 126 de la traverse 90 débouchent dans l'une des conduites de drainage 72 du rail 20 pour évacuer l'eau s'infiltrant entre la structure de montage et les panneaux de récupération 10 vers une gouttière 8 placée sur le pan 4 de la charpente 3 à l'extrémité opposée au faîte F.

La description du montage du système de récupération d'énergie solaire 5 a été faite en relation avec un montage réalisé directement sur la charpente 3 à partir d'un ou plusieurs kits rassemblant l'ensemble des composants décrits précédemment de la structure de montage, les composants étant séparés les uns des autres dans chacun des kits. En variante, la structure de montage pourrait être pré-assemblée à partir des mêmes kits puis fixée à la charpente 3.

## Revendications

1. Structure de montage pour monter au moins un panneau de récupération d'énergie solaire (10) sur un bâti (3), ledit panneau de récupération (10) présentant au moins deux bords (13, 14) perpendiculaires entre eux et un espace (15) délimité par les bords (13, 14), ledit espace (15) étant destiné à être placé en regard du bâti (3), ladite structure de montage comprenant :
- au moins un rail (20) s'étendant selon une direction longitudinale (X) d'un plan horizontal (P), ledit rail (20) comportant :
un socle (21) présentant une surface inférieure (22) horizontale destinée à reposer sur le bâti (3), ledit socle (21) étant destiné à être fixé au bâti (3),
une partie de maintien (40) portée par le socle (21) et s'étendant selon une direction verticale (Z) perpendiculaire au plan horizontal (P), à l'opposé de la surface inférieure (22) du socle (21), ladite partie de maintien (40) présentant au moins une surface d'appui (42) horizontale sur laquelle l'un, longitudinal (13), des bords du panneau de récupération (10) est destiné à reposer,
- au moins une traverse (90) s'étendant selon une direction transversale (Y) du plan horizontal (P), perpendiculaire aux directions longitudinale (X) et verticale (Z), ladite traverse (90) comportant :
une base (91) présentant une surface inférieure (92) horizontale reposant sur le rail (20) et un bord (95), ladite base (91) étant fixée au rail (20),
une partie de maintien (100) portée par la base (91) et s'étendant selon la direction verticale (Z), à l'opposé de la surface inférieure (92) de la base (91), ladite partie de maintien (100) étant agencée à distance, selon la direction longitudinale (X), du bord (95) de la base (91) et présentant au moins une surface d'appui (102) horizontale sur laquelle l'autre bord, transversal (14), du panneau de récupération (10) est destiné à reposer,
ladite structure de montage étant **caractérisée en ce que** la traverse (90) comporte en outre une aile (120) portée par la base (91) en regard de la partie de maintien (100), ladite aile (120) s'étendant entre une première extrémité (121) reliée au bord (95) de la base (91) et une deuxième extrémité (122), ladite aile (120) étant inclinée par rapport à la direction verticale (Z) en s'écartant de la partie de maintien (100) et la deuxième extrémité (122) étant placée à une distance, selon la direction verticale (Z), de la base (91) supérieure à celle de la surface d'appui (102) de la partie de maintien (100) de la traverse (90), de sorte à permettre un montage de la traverse (90) sur le rail (20) après que le panneau de récupération (10) a été monté sur le rail (20) en inclinant la traverse (90) autour d'un axe parallèle à la direction transversale (Y).

2. Structure de montage selon la revendication 1, dans laquelle l'aile (120) présente une courbure dirigée vers la partie de maintien (100) depuis la base (91) jusqu'à l'extrémité libre (122).

3. Structure de montage selon la revendication 2, dans laquelle la courbure a un rayon de courbure constant.

4. Structure de montage selon l'une quelconque des revendications 1 à 3, dans laquelle la base (91) de la traverse (90) comprend un unique bras (128) de fixation au rail (20) disposé à l'opposé de l'aile (120) par rapport à la partie de maintien (100).

5. Structure de montage selon la revendication 4, dans laquelle la base (91) de la traverse (90) présente un bord (96) opposé au bord (95) auquel l'aile (120) est reliée et agencé à distance, selon la direction longitudinale (X), de la partie de maintien (100), le bras (128) s'étendant horizontalement depuis le bord opposé (96).

6. Structure de montage selon la revendication 5, dans laquelle la traverse (90) comprend une conduite de drainage (126) délimitée par la partie de maintien (100) et une paroi latérale (127) qui s'étend en regard de ladite partie de maintien (100), depuis le bord opposé (96) de la base (91), le bras (128) étant disposé à l'extérieur de la conduite de drainage (126).

7. Kit pour la réalisation d'une structure de montage selon l'une quelconque des revendications 1 à 6, comprenant :
- au moins un rail (20) s'étendant selon une direction d'extension (Er) et comportant :
un socle (21) présentant une surface inférieure (22) plane,
une partie de maintien (40) portée par le socle (21) et s'étendant selon une direction perpendiculaire à la surface inférieure (22) du socle (21), à l'opposé de ladite surface inférieure (22), ladite partie de maintien (40) présentant au moins une surface d'appui (42) parallèle à la surface inférieure (22) du socle (21),
- au moins une traverse (90) s'étendant selon une direction d'extension (Et) et comportant :
une base (91) présentant une surface inférieure (92) plane et un bord (95),
une partie de maintien (100) portée par la base (91) et s'étendant selon une direction perpendiculaire à la surface inférieure (92) de la base (91), à l'opposé de ladite surface inférieure (92), ladite partie de maintien (100) étant agencée à distance, selon une direction perpendiculaire à la direction d'extension (Et) de la traverse (90), du bord (95) de la base (91) et présentant au moins une surface d'appui (102) parallèle à la surface inférieure (92) de la base (91),
dans lequel la traverse comporte en outre une aile (120) portée par la base (91) en regard de la partie de maintien (40), ladite aile (120) s'étendant entre une première extrémité (121) reliée au bord (95) de la base (91) et une deuxième extrémité (122), ladite aile (120) étant inclinée par rapport à la direction perpendiculaire à la surface inférieure (92) de la base (91) en s'écartant de la partie de maintien (100) et la deuxième extrémité (122) étant placée à une distance, selon la direction perpendiculaire à la surface inférieure (92) de la base (91), de la base (91) supérieure à celle de la surface d'appui (102) de la partie de maintien (100) de la traverse (90).

8. Système de récupération d'énergie solaire (5) comprenant:
- une structure de montage selon l'une quelconque des revendications 1 à 6, la surface inférieure (92) de la base (91) de la traverse (90) reposant sur le rail (20), la traverse (90) étant fixée au rail (20),
- au moins un panneau de récupération d'énergie solaire (10), ledit panneau de récupération (10) présentant au moins deux bords (13, 14) perpendiculaires entre eux, l'un, longitudinal (13), des bords reposant sur la surface d'appui (42) du rail (20), l'autre bord, transversal (14), reposant sur la surface d'appui (102) de la traverse (90), l'aile (120) de la traverse (90) étant disposée dans l'espace (15) du panneau de récupération (10).

9. Installation comprenant un système de récupération d'énergie solaire (5) selon la revendication 8, et un bâti (3) sur lequel la surface inférieure (22) du socle (21) du rail (20) repose et auquel le socle (21) du rail (20) est fixé.

10. Procédé de montage d'un système de récupération d'énergie solaire (5) sur un bâti (3), comprenant les étapes consistant à :
- prévoir un bâti (3) présentant un plan horizontal (P) et au moins un panneau de récupération d'énergie solaire (10) présentant au moins deux bords (13, 14) perpendiculaires entre eux et un espace (15) délimité par les bords (13, 14),
- prévoir au moins un rail (20) s'étendant selon une direction d'extension (Er) et comportant :
un socle (21) présentant une surface inférieure (22) plane,
une partie de maintien (40) portée par le socle (21) et s'étendant selon une direction perpendiculaire à la surface inférieure (22) du socle (21), à l'opposé de ladite surface inférieure (22), ladite partie de maintien (40) présentant au moins une surface d'appui (42) parallèle à la surface inférieure (22) du socle (21),
- prévoir au moins une traverse (90) s'étendant selon une direction d'extension (Et) et comportant :
une base (91) présentant une surface inférieure (92) plane et un bord (95),
une partie de maintien (100) portée par la base (91) et s'étendant selon une direction perpendiculaire à la surface inférieure (92) de la base (91), à l'opposé de ladite surface inférieure (92), ladite partie de maintien (100) étant agencée à distance, selon une direction perpendiculaire à la direction d'extension (Et) de la traverse (90), du bord (95) de la base (91) et présentant au moins une surface d'appui (102) parallèle à la surface inférieure (92) de la base (91),
une aile (120) portée par la base (91) en regard de la partie de maintien (100), ladite aile (120) s'étendant entre une première extrémité (121) reliée au bord (95) de la base (91) et une deuxième extrémité (122), ladite aile (120) étant inclinée par rapport à la direction perpendiculaire à la surface inférieure (92) de la base (91) en s'écartant de la partie de maintien (100) et la deuxième extrémité (122) étant placée à une distance, selon la direction perpendiculaire à la surface inférieure (92) de la base (91), de la base (91) supérieure à celle de la surface d'appui (102) de la partie de maintien (100) de la traverse (90),
- poser la surface inférieure (22) du socle (21) du rail (20) sur le bâti (3) de telle manière que la direction d'extension (Er) du rail (20) soit parallèle à une direction longitudinale (X) du plan horizontal (P), et fixer le socle (21) au bâti (3),
- poser l'un, longitudinal (13), des bords du panneau de récupération (10) sur la surface d'appui (42) du rail (20), l'espace (15) du panneau de récupération (10) étant placé en regard du bâti (3),
- positionner la traverse (90) par rapport au rail (20) de telle manière que la direction d'extension (Et) de la traverse (90) soit parallèle à une direction transversale (Y) du plan horizontal (P), perpendiculaire à la direction longitudinale (X),
- incliner la traverse (90) dans un sens autour d'un axe parallèle à la direction transversale (Y) de sorte à faire passer l'aile (120) sous l'autre bord, transversal (14), du panneau de récupération (10) et incliner la traverse (90) dans l'autre sens autour de l'axe de sorte à disposer l'aile (120) dans l'espace (15) du panneau de récupération (10),
- poser la surface inférieure (92) de la base (91) de la traverse (90) sur le rail (20) et fixer la base (91) de la traverse (90) au rail (20).
